# EUROPÄISCHE PATENTSCHRIFT

(11) **EP 2 273 260 B1**
(45) Veröffentlichungstag und Bekanntmachung des Hinweises auf die Patenterteilung: **04.12.2013**
(21) Anmeldenummer: 10169070.9
(22) Anmeldetag: 09.07.2010
(51) Int. Cl.: G01N 29/07, G01N 29/48, G01N 29/44

(54) **Verbesserte zerstörungsfreie Untersuchung von Hochdruckleitungen**
Improved non-destructive inspection of high pressure lines
Examen non destructif amélioré de conduites haute pression

(30) Priorität: 09.07.2009 DE 102009027598
(43) Veröffentlichungstag der Anmeldung: 12.01.2011
(73) Patentinhaber: GE Sensing & Inspection Technologies GmbH, 50354 Hürth (DE)
(72) Erfinder: Prause, Reinhard, 53757, St. Augustin (DE); Lingenberg, Dieter, 50354, Hürth (DE)
(74) Vertreter: Bauer Vorberg Kayser Patentanwälte

(56) Entgegenhaltungen:
- EP-A2- 2 006 675
- DE-A1- 10 214 678
- US-A- 5 549 004
- US-A- 6 164 137
- US-A1- 2008 236 286

## Beschreibung

Die Erfindung bezieht sich auf ein Verfahren zur Untersuchung einer Hochdruckleitung als Prüfstück. Es ist bekannt Hochdruckleitung, insbesondere auch metallische Hochdruckleitungen für Kraftstoffeinspritzsystem, mittels Druckbeaufschlagung auf Verarbeitungs- beziehungsweise Materialmängel zu überprüfen. Dabei werden die Rohre üblicherweise mit einem über dem tatsächlichen Betriebsdruck liegenden Druck unter Vorgaben zur Druckerhöhung und Haltezeit des Prüfdruckes beaufschlagt, um einen Ausschusstest durchzuführen. Dieser Test ist bekanntermaßen mangelhaft, da er keine Information über das innere Gefüge der Rohre ermöglicht. Strukturelle Fehler im inneren Gefüge der Rohre, die zwar zu keinem akuten Ausfall der Rohre führen aber dennoch ein Risiko für ein zukünftiges Ausfallen bergen, werden auf diesem Wege nicht erkannt. Bisherige Versuche die Rohre eben zerstörungsfrei und volumenorientiert zu untersuchen, scheiterten einerseits an den Kosten, was die üblichen durchstrahlungsbasierten Untersuchungen betrifft.

Andererseits und insbesondere was den Ultraschall betrifft, bestand bei diesen Hochdruckleitungen, die im Vergleich zu den üblichen Prüflingen der Ultraschallprüfung regelmäßig geringe Abmessungen aufweisen, das Vorurteil, dass der Ultraschall aufgrund der vergleichsweise großen Abmessung der Schallwandler nicht geeignet und für eine Untersuchung reproduzierbar einzukoppeln wäre. Zudem besteht regelmäßig das Problem, dass diese Rohre nicht geradlinig ausgebildet sind, so dass die üblichen Herangehensweisen, wie diese, die bei der Untersuchung von Gas- oder Öltransportröhren üblich sind und beispielsweise eine in Richtung des Umfangs der Röhre gewinkelte Einstrahlung vorsehen, um eine Schallausbreitung in Umfangsrichtung zu bewirken, bei der Untersuchung von Hochdruckleitungen scheitern, da der erforderliche Winkel zur definierten gewinkelten Abstrahlung des Ultraschallwandlers in den Prüfling nicht oder zumindest nicht reproduzierbar eingehalten werden kann.

Es ist dem Verdienst der Erfinder zuzurechnen, erkannt zu haben, dass Hochdruckleitungen, insbesondere für Kraftstoffeinspritzsysteme, mittels Ultraschall im Impuls-Echo-Verfahren trotz der zuvor beschriebenen Vorurteile effektiv untersucht werden können. Vor dem Hintergrund des zuvor beschriebenen Standes der Technik ist es daher Aufgabe der vorliegenden Erfindung, ein zuverlässigeres Verfahren zur Materialprüfung von Hochdruckleitungen, insbesondere von Kraftstoffeinspritzleitungen, bereitzustellen. Diese Aufgabe wird durch ein Verfahren gemäß Anspruch 1 gelöst. Vorteilhafte Ausgestaltungen sind jeweils Gegenstand der abhängigen Ansprüche. Es ist darauf hinzuweisen, dass die in den Patentansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Erfindungsgemäß ist vorgesehen, dass bei dem Verfahren zur zerstörungsfreien Ultraschalluntersuchung der Hochdruckleitung als Prüfstück mittels Impuls-Echo-Verfahren, die Hochdruckleitung einem Nahfeldbereich wenigstens eines Ultraschallwandlers so zugeführt wird und ein Ultraschallimpuls unter senkrechtem Schalleinfall auf die Hochdruckleitung so abgestrahlt wird, dass die Hochdruckleitung im Querschnitt durch die vom Ultraschallwandler bewirkte Nahfeldschallabstrahlung vollständig erfasst wird. Erfindungsgemäß sind ferner der Empfang des oder der reflektierten Ultraschallimpulse durch den und/oder gegebenenfalls weitere Ultraschallwandler, Aufzeichnung und gegebenenfalls Auswertung der Echolaufzeiten vorgesehen. Der Begriff "Hochdruckleitung" im Sinne der Erfindung ist weit auszulegen und umfasst beispielsweise auch Leitungen mit gegenüber dem Außendurchmesser minimalem Innendurchmesser und auch solche mit auf Null reduziertem Innendurchmesser. Bevorzugt handelt es sich um metallische Kraftstoffleitungen für Verbrennungsmotoren mit Kraftstoffeinspritzsystem.

Die Ultraschallprüfung, insbesondere das Impuls-Echo-Verfahren, ist im Stand der Technik ein geeignetes Prüfverfahren bei schallleitfähigen Werkstoffen (dazu gehören die meisten Metalle) zur Auffindung von inneren und äußeren Fehlern. Wie alle Prüfverfahren ist auch die Ultraschallkontrolle genormt und wird nach Richtlinien durchgeführt, beispielsweise gemäß der DIN EN 10228-3 1998-07 Zerstörungsfreie Prüfung von Schmiedestücken aus Stahl - Teil 3: Ultraschallprüfung von Schmiedestücken aus ferritischem und martensitischem Stahl. Für die zerstörungsfreie Prüfung eines Prüfstücks durch Ultraschall sind geeignete Prüfgeräte und Verfahren bekannt. Ganz allgemein verwiesen wird auf das Fachbuch von J. und. H. Krautkrämer, Werkstoffprüfung mit Ultraschall, sechste Auflage.

Allgemein basiert dieses Verfahren auf der Reflexion von Schall an Grenzflächen. Als Schallquelle verwendet man meist einen Prüfkopf mit wenigstens einem Ultraschallwandler, dessen Strahlung je- weils im Frequenzbereich von 10 kHz bis 100 MHz, typischerweise bei 10 MHz, liegt. Beim Impulsechoverfahren gibt der Ultraschallschallkopf keine kontinuierliche Strahlung ab, sondern sehr kurze Schallimpulse, deren Dauer 1µs und weniger ist. Der vom Sender ausgehende Impuls durchläuft mit der betreffenden Schallgeschwindigkeit das zu untersuchende Prüfstück, hier die Hochdruckleitung, und wird an den vorhandenen Grenzflächen fast vollständig reflektiert. Der Schallwandler kann meist nicht nur Impulse aussenden, sondern auch ankommende Impulse in elektrische Messsignale umwandeln, er arbeitet also auch als Empfänger. Die Zeit, die der Schallimpuls benötigt, um vom Sender durch das Werkstück und wieder zurück zu kommen wird mit einem Oszilloskop oder einer Rechnereinheit gemessen. Bei bekannter Schallgeschwindigkeit c im Material lässt sich auf diese z. B. Weise die Dicke einer Probe kontrollieren. Zur Kopplung zwischen Hochdruckleitung und Ultraschallwandler wird im Bereich dazwischen ein Koppelmittel, wie Gel, Wasser oder Öl eingebracht. Bei einer Relativbewegung zwischen Wandler und Prüfstück wird in einer Ausgestaltung zwecks Übertragung des Schallsignals das Prüfstück oft in eine geeignete Flüssigkeit getaucht (Tauchtechnik), oder definiert benetzt.

Änderungen der akustischen Eigenschaften an Grenzflächen, d.h. an den äußeren das Prüfstück begrenzenden Wandflächen aber auch an inneren Grenzflächen d.h. Fehlern im Innern wie ein Lunker (Hohlraum), ein Einschluss, eine Dopplung, ein Riss oder eine andere Trennung im Gefüge im Inneren der zu prüfenden Hochdruckleitung reflektieren den Schallimpuls und senden diesen an den Wandler im Prüfkopf, der sowohl als Sender wie auch als Empfänger fungiert, zurück. Die vergangene Zeit zwischen Senden und Empfangen lässt die Berechnung des Weges zu. Anhand der gemessenen Zeitdifferenz wird ein Signalbild erzeugt und auf einem Monitor oder Oszilloskop sichtbar gemacht. Anhand dieses Bildes des Laufzeitverhaltens kann die Lage bestimmt und gegebenenfalls die Größe des Fehlers (in der Fachsprache Ungänze genannt) durch Vergleichen mit einem Ersatzreflektor (Flachbodenbohrung (Kreis-Scheiben-Reflektor), Nut, Querbohrung) abgeschätzt werden. Im Allgemeinen können Ungänzen mit einer Größe von ca. 0,6 mm erkannt werden, bei Spezialverfahren auch bis 0,1 mm oder kleiner. Bei automatischen Prüfanlagen werden die Informationen gespeichert, zum Prüfstück relativiert und auf verschiedene Weisen sofort oder später dokumentiert.

Das erfindungsgemäße Verfahren zeichnet sich dadurch aus, dass im Wesentlichen senkrecht abgestrahlt wird, d.h. die Abstrahlrichtung des Wandlers steht im Wesentlichen senkrecht zu einer durch eine Radial- und die Axialrichtung (Längsrichtung) der rohrförmigen Leitung aufgespannten Ebene. Ferner wird erfindungsgemäß der Prüfling bzw. das Prüfstück, hier die Hochdruckleitung, dem Nahfeld des Ultraschallwandlers zugeführt. Bei dem Nahfeld handelt es sich um den dem Wandler nächsten Abstrahlbereich, der sich bis zum sogenannten Fokus erstreckt. Bei dem Fokus (Ebenen-, Linien- oder Punktfokus) handelt es sich um den Bereich der Ultraschallstrahlungscharakteristik eines Wandlers mit dem geringsten Durchmesser und dem größten lateralen Auflösungsvermögen. Die Fokuszone liegt als "natürliche Strahltaille" im Übergang zwischen dem inhomogenen Nahfeld und dem divergenten Fernfeld mit seinen homogen, ebenen Schallwellenfronten. Erfindungswesentlich ist, dass der Ultraschall dieses Nahfeld geeignet ist, die Hochdruckleitung im Querschnitt vollständig zu erfassen. Aufgrund von Beugungseffekten und Wellenaufteilung in verschiedene Wellenausbreitungsarten (longitudinal beziehungsweise transversal) kann es zu einer Aufweitung der Strahlungsverteilung im Prüfstück und eine vollständigen Erfassung des Leitungsquerschnitt erreicht werden, obwohl die Strahlungskeule der Abstrahlcharakteristik für sich genommen, d.h. ohne die eingebrachte Leitung, eine solche Breite nicht gegeben wäre. Bevorzugt wird jedoch sicher gestellt, dass die vom Prüfling unabhängige Nahfeldabstrahlung des Wandlers den Querschnitt des Prüflings volltständig zur Deckung gebracht werden kann, indem der Wandler, bzw. die Leitung so bemessen sind, dass der Querschnitt des Leiters vollständig in dem theoretisch bestimmten, prüflingslosen Nahfeldbereich fallen kann. Damit wird eine zuverlässige Detektion erreicht.

Bevorzugt wird bei dem erfindungsgemäßen Verfahren als Ultraschallwandler ein Piezokristallschwinger verwendet, dessen Querabmessung im Wesentlichen dem Außendurchmesser der Hochdruckleitung entspricht.

Es hat sich überraschend gezeigt, dass die zuvor beschriebene das Prüfstück im Querschnitt vollständig erfassende Nahfeldschallabstrahlung geeignet ist, Fehler im Material und/oder der Oberfläche der Hochdruckleitung erkennen zu können, beispielsweise sprunghafte Wanddickenänderungen, Einschlüsse (Lunker), Fremdkörper in der Rohrwand ebenso Oberflächenbeschädigungen auf der Außen- und Innenrohrwand und insbesondere längsorientierte Risse. Es hat sich gezeigt, dass die üblichen Verfahren zur Fehlerauswertung Anwendung finden können.

Bevorzugt wird bei der Auswertung eine Amplitudenbewertung der Ultraschallechosignale vorgenommen. Beispielsweise werden sogenannte Blenden und Monitorschwellen gesetzt. Die Monitorschwellen für das Eintritts- und Rückwandecho bewerten die Amplitude in negativer Logik (anti-koinzidenz), d.h. unterschreitet die Amplitude durch eine Echo-Absenkung die eingestellte Monitorschwelle, so wird ein Ausgangssignal gesetzt. Das Fehlerecho jedoch ist eine zusätzliche Amplitude, die die Anzeige in positiver Logik (koinzidenz) bewertet. Übersteigt die Fehler-Amplitude die eingestellte Monitorschwelle, so wird ein Ausgangssignal gesetzt. Im Allgemeinen werden die Blenden durch Ermittlung an einem oder mehreren Testprüflingen mit bzw. ohne Testfehler ermittelt.

Es hat sich ferner gezeigt, dass das erfindungsgemäße Verfahren besonders effizient und zuverlässig in der Fehlererkennung ist, wenn der Echolaufzeitenbereich bis zum Echo oder Mehrfachecho der vom Ultraschallwandler abliegenden Außenwand (Rückwand), bevorzugt zwischen dem Echo an der dem Ultraschallwandler nächstbenachbarten Innenwand und dem dritten Echo an der vom Ultraschallwandler abliegenden Außenwand einer Amplitudenbewertung unterzogen wird.

Bevorzugt werden bei der Auswertung ein Rückwandecho und/oder ein Mehrfachrückwandecho einer Amplitudenbewertung hinsichtlich Antikoinzidenz unterzogen. Es hat sich gezeigt, dass der "Ausfall" bzw. der Amplitudenabfall betreffend die zu erwartenden Rückwandechos zuverlässig Fehler im Bereich der Innenrohroberfläche detektieren lässt.

Die erfindungsgemäße Zuführung der Hochdruckleitung, kann eine translatorische und/oder rotierende Bewegung der Hochdruckleitung umfassen. Die Vorgehensweise ist generell dem Fachmann bekannt. Beispielsweise können die Zuführung und der Vorschub intermittierend zwischen Prüfzyklen, bei denen in verschiedene Abschnitte und/oder unter verschiedenen Winkeln die Ultraschalleinstrahlung gegebenenfalls durch mehrere, in Axial- und/oder Radialrichtung versetzt angeordnete Ultraschallwandler, beispielsweise aus 8, 12, 16, 24 Ultraschallwandlern, erfolgen, um den Hochdruckleitung vollständig zu erfassen. Das Problem der vollständigen Untersuchung der Hochdruckleitung wird in einer weiteren Ausgestaltung um einen in Umfangrichtung um die Hochdruckleitung rotierenden Wandler gelöst.

Bei den Verfahren zur zerstörungsfreien Ultraschalluntersuchung eines Prüfstücks ist es von erheblicher Wichtigkeit, für eine gute Ankopplung des Ultraschallwandlers zu sorgen und diese zu überwachen, um eine hohe Qualität der Materialprüfung zu erreichen und einhalten zu können. Beispielsweise kann die Ankopplung über Wasserspalt oder Wasserkammer, oder im Tauchverfahren oder in Squirtertechnik erfolgen. Es hat sich die Ankopplung mittels eines rotierenden Wassermantels als günstigste Herangehensweise erwiesen. Eine zugehörige Anordnung ist aus der DE19931350A1 bekannt.

Erfindungsgemäß liegt der Außendurchmesser der Leitung im Bereich der Querausdehnung der typischerweise verwendeten auf dem Piezoeffekt basierenden Ultraschallwandler. Durch mehrfache Versuche konnten die Erfinder feststellen, dass Hochdruckleitungen mit einem Außendurchmesser von oder weniger als 10 mm besonders für diese Art von Untersuchung geeignet sind, bevorzugt von oder weniger als 8 mm, bevorzugter von oder weniger als 6 mm.

Die Erfinder haben durch umfangreiche Versuche festgestellt, dass das erfindungsgemäße Verfahren sich für die folgenden Innendurchmesser von oder weniger als 5 mm, bevorzugt von oder weniger als 3 mm, bevorzugter von oder weniger als 2 mm, noch bevorzugter von oder weniger als 1,5 mm, besonders eignet.

In einer weiteren Ausgestaltung können Mittel zur örtlich selektiven Dämpfung der Ultraschallabstrahlung im Schalldurchtrittsbereich zwischen Prüfstück und Wandler vorgesehen sein. Beispielsweise ist in der Mitte des Ultraschallwandlers ein schalldämpfender Körper, beispielsweise aus porösem Material, wie Kork, und mit gegenüber dem Wandler geringerer Querabmessung vorgesehen, um den Schall im Mittenbereich der Schallkeule zu dämpfen.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Es zeigen schematisch:

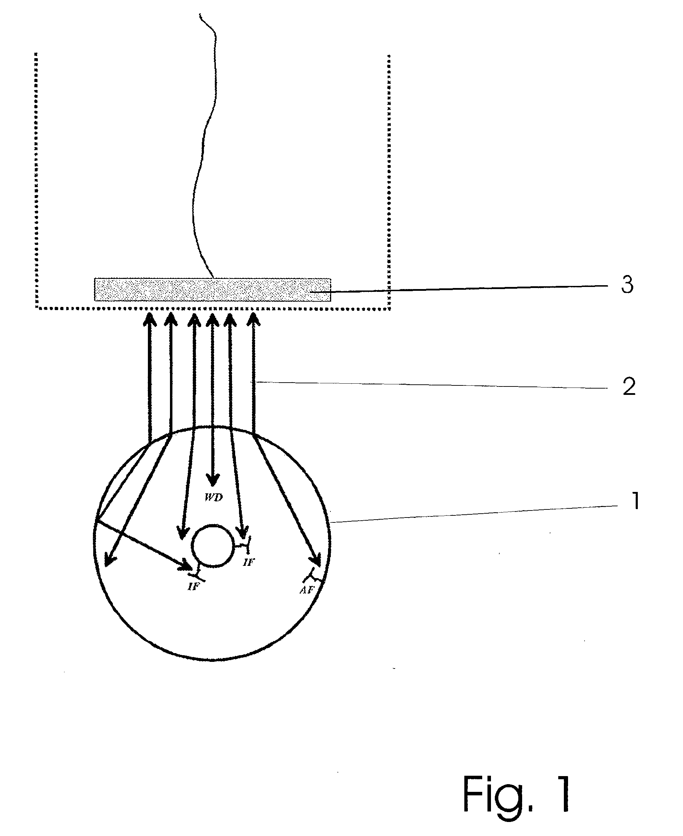

Figur 1 zeigt im Querschnitt eine Anordnung zur Durchführung des zuvor beschriebenen Verfahrens. Der Ultraschallwandler 3, hier ein Piezokristallwandler, weist eine Querabmessung auf, die im Wesentlichen dem Außendurchmesser der zu untersuchenden Hochdruckleitung 1 entspricht. Durch Doppelfeile ist schematisch die Schallausbreitung des Ultraschalls 2 dargestellt. Erfindungswesentlich ist, dass die Hochdruckleitung 1 im Ultraschallnahfeldbereich 2 des Ultraschallwandlers 3 angeordnet ist und diese Ausrichtung bezüglich des Wandlers 3 beim Weitertransport der Hochdruckleitung 1 in einer zur Papierebene der Figur senkrechten Richtung beibehalten wird. Dies wird beispielsweise durch nicht dargestellte hülsenförmige Führungen erreicht. Wie dem schematischen Aufbau zu entnehmen, ist der Wandler 3 so ausgerichtet, dass die Hauptausbreitungsrichtung des Schalls 3, die im Wesentlichen der Richtung des Doppelpfeils WD entspricht, senkrecht auf eine durch den Radius und die Axial- bzw. Längsrichtung der Leitung 1 aufgespannte Ebene trifft. Bevorzugt kreuzt die Hauptausrichtung die zentrale Längsachse der Leitung 1 in dem betreffenden Untersuchungsabschnitt senkrecht.

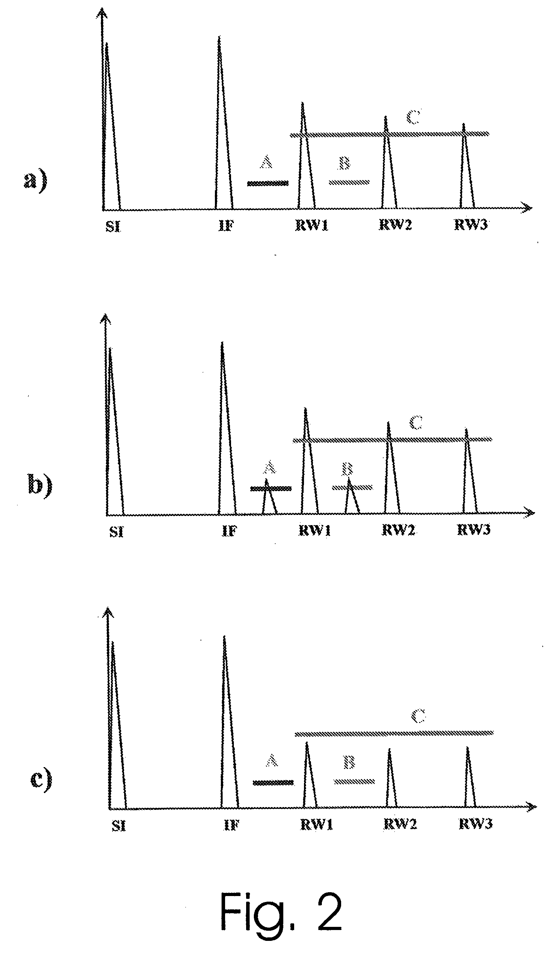

Die Schallausbreitung des Nahfeldes des Wandlers 3 ist gegebenenfalls durch Beugungseffekte und Wellenumwandlung im Material des Prüfstücks, so, dass das Prüfstück 1 vollständig erfasst ist. Wie den Figuren 2a- 2c, die das Laufzeitverhalten und die Amplituden der Echos schematisch darstellen, zu entnehmen ist, treten typische, durch die Dimensionierung der Leitung 1 sich ergebende Echos, wie die Rückwandechos RW1 bis RW3 und gegebenenfalls Fehlerechos auf. Während mit SI das Sendeecho bezeichnet ist, ist IF ein Innenfehler der typischerweise einfach in der Laufzeitdarstellung als Echo zu identifizieren ist. Die Blenden A (Blende zwischen dem Innenwandecho und dem ersten Rückwandecho RW1) und B (Blende zwischen dem ers- ten und zweiten Rückwandecho) dienen der Erkennung von seitlichen, d.h. von der Hauptabstrahlrichtung seitlich abliegenden Fehlern AF (siehe Figur 1) im Material des Prüfstücks 1 und werden logisch so durch eine nicht dargestellte Auswerteinheit ausgewertet, dass sie bei Überschreiten einer Schwelle (Koinzidenz) ein Detektionssignal hervorrufen.

Die Blende C erfasst den Zeitbereich der Rückwandechos in etwa vom ersten bis zum dritten Rückwandecho RW1 bis RW3. Deren Amplitudenabfall oder -Ausfall wird logisch auf Antikoinzidenz durch die nicht dargestellte Auswerteinheit ausgewertet und das damit erzeugte Detektionssignal weist auf einen gestörten Innenrohrdurchmesser, d.h. auf einen Fehler im Innenwandbereich der Leitung 1 hin.

## Patentansprüche

1. Verfahren zur zerstörungsfreien Ultraschalluntersuchung einer Hochdruckleitung (1) als Prüfstück mittels Impuls-Echo-Verfahren, wobei die Hochdruckleitung (1) einem Nahfeldbereich (2) wenigstens eines Ultraschallwandlers (3) zugeführt wird und ein Ultraschallimpuls auf die Hochdruckleitung (1) abgestrahlt wird und der oder die reflektierten Ultraschallimpulse durch den und/oder gegebenenfalls weitere Ultraschallwandler (3) empfangen werden, die zugehörigen Echolaufzeiten aufgezeichnet und gegebenenfalls ausgewertet werden, **dadurch gekennzeichnet, dass** der Ultraschallwandler (3) so angeordnet ist, dass er einen Ultraschallimpuls in einer zu einer Ebene, die von einer Radial- und Axialrichtung der Hochdruckleitung aufgespannt wird, senkrechten Richtung auf die Hochdruckleitung (1) so abstrahlt, dass die Hochdruckleitung (1) im Querschnitt durch die vom Ultraschallwandler (3) bewirkte Nahfeldschallabstrahlung (2) vollständig erfasst wird und die Hochdruckleitung (1) einen Außendurchmesser von oder weniger als 10 mm aufweist.

2. Verfahren zur zerstörungsfreien Ultraschalluntersuchung gemäß Anspruch 1, wobei die Hochdruckleitung (1) so geführt wird, dass deren Querschnitt im Nahfeldbereich des Ultraschallwandlers (3) liegt.

3. Verfahren zur zerstörungsfreien Ultraschalluntersuchung gemäß einem der vorhergehenden Ansprüche, wobei der Ultraschallwandler (3) ein Piezoschwinger ist, dessen Querabmessung im Wesentlichen dem Außendurchmesser der Hochdruckleitung entspricht.

4. Verfahren zur zerstörungsfreien Ultraschalluntersuchung gemäß einem der vorhergehenden Ansprüche, wobei zur akustischen Kopplung zwischen dem wenigstens einen Ultraschallwandler (3) und der Hochdruckleitung (1) ein rotierender Wassermantel verwendet wird.

5. Verfahren zur zerstörungsfreien Ultraschalluntersuchung gemäß einem der vorhergehenden Ansprüche, wobei bei der Auswertung der Echolaufzeitenbereich bis zum Echo oder Mehrfachecho (RW1, RW2, RW3) an der vom Ultraschallwandler (3) abliegenden Außenwand der Hochdruckleitung (1), bevorzugt zwischen dem Echo an der dem Ultraschallwandler nächstbenachbarten Innenwand und dem dritten Echo an der vom Ultraschallwandler (3) abliegenden Außenwand, einer Amplitudenbewertung unterzogen wird.

6. Verfahren zur zerstörungsfreien Ultraschalluntersuchung gemäß dem vorhergehenden Anspruch, wobei bei der Auswertung ein Rückwandecho und/oder ein Mehrfachrückwandecho (RW1, RW2, RW3) einer Amplitudenbewertung auf Antikoinzidenz unterzogen werden.

7. Verfahren zur zerstörungsfreien Ultraschalluntersuchung gemäß dem vorhergehenden Anspruch, wobei die Hochdruckleitung (1) einen Außendurchmesser von oder weniger als 8 mm, bevorzugter von oder weniger als 6 mm aufweist.

8. Verfahren zur zerstörungsfreien Ultraschalluntersuchung gemäß dem vorhergehenden Anspruch, wobei die Hochdruckleitung (1) einen Innendurchmesser von oder weniger als 5 mm, bevorzugt von oder weniger als 3 mm, bevorzugter von oder weniger als 2 mm, noch bevorzugter von oder weniger als 1,5 mm aufweist.

9. Verfahren zur zerstörungsfreien Ultraschalluntersuchung gemäß einem der vorhergehenden Ansprüche, mit mehreren in Umfangsrichtung und/oder in Axialrichtung versetzt angeordneten Ultraschallwandlern.

## Claims

1. Method for the non-destructive ultrasound inspection of a high-pressure line (1) as a testing piece by means of the pulse-echo method, wherein the high-pressure line (1) is conveyed to a near-field range (2) of at least one ultrasonic transducer (3) and an ultrasonic pulse is emitted onto the high-pressure line (1) and the reflected ultrasonic pulse(s) is/are received by the ultrasonic transducer and/or, optionally, further ultrasonic transducers (3), the associated echo delay times are recorded and, optionally, evaluated, **characterised in that** the ultrasonic transducer (3) is disposed such that it emits an ultrasonic pulse onto the high-pressure line (1) in a direction that is perpendicular to a plane spanned by a radial and axial direction in such a way that the high-pressure line (1) is completely captured in its cross section by the near-field sound emission (2) caused by the ultrasonic transducer (3), and that the high-pressure line (1) has an external diameter of 10 mm or less.

2. Method for the non-destructive ultrasound inspection according to claim 1, wherein the high-pressure line (1) is conveyed in such a way that its cross section lies within the near-field range of the ultrasonic transducer (3).

3. Method for the non-destructive ultrasound inspection according to any one of the preceding claims, wherein the ultrasonic transducer (3) is a piezo oscillator, the transverse dimension of which substantially corresponds to the external diameter of the high-pressure line.

4. Method for the non-destructive ultrasound inspection according to any one of the preceding claims, wherein a rotating water jacket is used for acoustic coupling between the at least one ultrasonic transducer (3) and the high-pressure line (1).

5. Method for the non-destructive ultrasound inspection according to any one of the preceding claims, wherein, during the evaluation, the echo delay time range until the echo or multiple echo (RW1, RW2, RW3) at the external wall of the high-pressure line (1) facing away from the ultrasonic transducer (3), preferably between the echo on the internal wall closest to the ultrasonic transducer and the third echo on the external wall facing away from the ultrasonic transducer (3), is subjected to an amplitude evaluation.

6. Method for the non-destructive ultrasound inspection according to the preceding claim, wherein, during the evaluation, a back-face echo and/or a multiple back-face echo (RW1, RW2, RW3) is subjected to an amplitude evaluation with regard to anticoincidence.

7. Method for the non-destructive ultrasound inspection according to the preceding claim, wherein the high-pressure line (1) has an external diameter of 8 mm or less, more preferably of 6 mm or less.

8. Method for the non-destructive ultrasound inspection according to the preceding claim, wherein the high-pressure line (1) has an internal diameter of 5 mm or less, preferably of 3 mm or less, more preferably of 2 mm or less, still more preferably of 1.5 mm or less.

9. Method for the non-destructive ultrasound inspection according to any one of the preceding claims, comprising a plurality of ultrasonic transducers disposed offset in the circumferential direction and/or the axial direction.

## Revendications

1. Procédé d'examen non-destructif par ultrasons d'une conduite à haute pression (1) comme éprouvette, au moyen d'une méthode par écho d'impulsions, la conduite à haute pression (1) étant amenée à une zone de champ proche (2) d'au moins un transducteur ultrasonore (3), et une impulsion ultrasonore étant émise sur la conduite à haute pression (1) et la ou les impulsion(s) ultrasonore(s) réfléchie(s) étant reçue(s) par ledit et/ou, le cas échéant, d'autres transducteur(s) ultrasonore(s) (3), les temps de propagation de l'écho associés étant enregistrés et, le cas échéant, évalués, **caractérisé par le fait que** ledit transducteur ultrasonore (3) est agencé de manière à ce qu'il émette une impulsion ultrasonore sur la conduite à haute pression (1) dans une direction perpendiculaire à un plan défini par une direction radiale et axiale de la conduite à haute pression, de telle sorte que ladite conduite à haute pression (1) est saisie complètement en section par l'émission sonore de champ proche (2) provoquée par le transducteur ultrasonore (3), et que la conduite à haute pression (1) présente un diamètre extérieur de ou inférieur à 10 mm.

2. Procédé d'examen non-destructif par ultrasons selon la revendication 1, dans lequel la conduite à haute pression (1) est guidée de telle sorte que sa section est située dans la zone de champ proche du transducteur ultrasonore (3).

3. Procédé d'examen non-destructif par ultrasons selon l'une quelconque des revendications précédentes, dans lequel ledit transducteur ultrasonore (3) est un transducteur piézoélectrique dont la dimension transversale correspond pour l'essentiel au diamètre extérieur de la conduite à haute pression.

4. Procédé d'examen non-destructif par ultrasons selon l'une quelconque des revendications précédentes, dans lequel on utilise une chemise d'eau rotative pour le couplage acoustique entre ledit au moins un transducteur ultrasonore (3) et la conduite à haute pression (1).

5. Procédé d'examen non-destructif par ultrasons selon l'une quelconque des revendications précédentes, dans lequel, lors de l'évaluation, la plage de temps de propagation d'écho jusqu'à l'écho ou l'écho multiple (RW1, RW2, RW3) sur la paroi extérieure de la conduite à haute pression (1), qui est opposée au transducteur ultrasonore (3), de préférence entre l'écho sur la paroi intérieure la plus voisine du transducteur ultrasonore et le troisième écho sur la paroi extérieure opposée au transducteur ultrasonore (3), est soumise à une évaluation d'amplitude.

6. Procédé d'examen non-destructif par ultrasons selon la revendication précédente, dans lequel, lors de l'évaluation, un écho de fond et/ou un écho de fond multiple (RW1, RW2, RW3) est soumis à une évaluation d'amplitude relative à l'auto-coïncidence.

7. Procédé d'examen non-destructif par ultrasons selon la revendication précédente, dans lequel ladite conduite à haute pression (1) présente un diamètre extérieur de ou inférieur à 8 mm, de préférence de ou inférieur à 6 mm.

8. Procédé d'examen non-destructif par ultrasons selon la revendication précédente, dans lequel la conduite à haute pression (1) présente un diamètre intérieur de ou inférieur à 5 mm, de préférence de ou inférieur à 3 mm, de préférence de ou inférieur à 2 mm, de préférence encore de ou inférieur à 1,5 mm.

9. Procédé d'examen non-destructif par ultrasons selon l'une quelconque des revendications précédentes, au moyen d'une pluralité de transducteurs ultrasonores disposés de façon décalée dans la direction circonférentielle et/ou dans la direction axiale.
